# EUROPEAN PATENT APPLICATION

(11) **EP 2 733 892 A1**
(43) Date of publication of application: **21.05.2014**
(21) Application number: 12860856.9
(22) Date of filing: 19.10.2012
(51) Int. Cl.: H04L 12/26, H04L 29/06

(54) **FILE TYPE IDENTIFICATION METHOD AND FILE TYPE IDENTIFICATION DEVICE**

(30) Priority: 24.12.2011 CN 201110439351
(71) Applicant: Huawei Technologies Co., Ltd., Shenzhen, Guangdong 518129 (CN)
(72) Inventor: RUAN, Linghong, Shenzhen Guangdong 518129 (CN); JIANG, Wu, Shenzhen Guangdong 518129 (CN); LI, Shiguang, Shenzhen Guangdong 518129 (CN); WANG, Zhenhui, Shenzhen Guangdong 518129 (CN)
(74) Representative: Lord, Michael
(86) International application number: PCT/CN2012/083169
(87) International publication number: WO 2013/091435

(57) **Abstract**

The present invention discloses a method for identifying a file type and an apparatus for identifying a file type, so as to solve a problem in the prior art that a file type cannot be effectively identified when a sender tampers with a file being transmitted. The method includes: acquiring, from a transmitted data packet, a file header of a file to be identified, and determining whether a magic number of the file to be identified can be obtained from the file header; if the magic number of the file to be identified can be obtained, searching first correspondence between a file type and the magic number for the file type that corresponds to the magic number in the file header; determining whether data of the file to be identified complies with a data structure feature of the file type; if the data of the file to be identified complies with the data structure feature of the file type, determining that a file type of the file to be identified is the file type that corresponds to the magic number in the file header; and if the data of the file to be identified does not comply with the data structure feature of the file type, determining that a file type of the file to be identified is an abnormal type, where the abnormal type is used to indicate that the file to be identified is a file whose type has been tampered with.

## Description

### CROSS-REFERENCE TO RELATED APPLICATION

This application claims priority to Chinese Patent Application No. 201110439351.9, filed with the Chinese Patent Office on December 24, 2011 and entitled "METHOD FOR IDENTIFYING FILE TYPE AND APPARATUS FOR IDENTIFYING FILE TYPE", which is incorporated herein by reference in its entirety.

### TECHNICAL FIELD

The present invention relates to the field of computer and communications technologies, and in particular, to a method for identifying a file type and an apparatus for identifying a file type.

### BACKGROUND

Computer networks greatly facilitate people's life and enable people in different places to seamlessly transmit data through computer interconnection. This, however, poses a challenge to information security. For an enterprise, how to ensure security of confidential information without affecting normal proceeding of work and business has become a hot issue. For example, in a scenario where a user sends an email that carries an attachment to another user who is connected to a network, considering security and audit aspects, such as preventing confidential information from being sent to an incorrect recipient, the enterprise often needs to identify and detect a type of a file being transmitted, and determine, according to a result of the identification and detection, whether the email needs to be filtered.

An early file type identification technology determines a file type according to a name suffix of a file, and its principle is as follows: A detection device arranged between a sender and a recipient performs protocol analysis for a transmitted data packet; and if it is determined that a file is being transmitted, extracts a name suffix, and determines a type of the file according to correspondence between the name suffix and the file type. For example, if the name suffix is "doc", the file is a word file; or if the name suffix is "txt", the file is a text file. This solution, however, can identify only a type of a file that has a name suffix. If the sender artificially removes the name suffix of the file and the recipient adds the real name suffix after the transmission is complete, a filtering device cannot effectively perform the identification and filtering.

To solve the foregoing problem, the prior art puts forward a method for identifying a file type based on a "magic number". The "magic number" refers to field content in a file header, where the field content can reflect different file type features. The principle is as follows: A detection device analyzes a file header of a file being transmitted, and if the file header includes a magic number that corresponds to a pre-stored known file type, determines that a type of the file being transmitted is the file type that corresponds to the magic number.

During the implementation of the present invention, the inventors finds that the prior art has at least the following problem:

The sender can artificially modify several bytes in the file header, so that the file header especially content of a field which the magic number occupies is changed, and the recipient restores the real file header after the transmission is complete, thereby achieving a purpose of evading identification and filtering. In this case, an existing detection device cannot determine which type of a file is being transmitted. Therefore, the prior art cannot effectively identify a type of a file being transmitted on a network, so that security of confidential information cannot be ensured.

### SUMMARY

Embodiments of the present invention provide a method for identifying a file type, so as to solve a problem in the prior art that a file type cannot be effectively identified when a sender tampers with a file being transmitted.

Correspondingly, the embodiments of the present invention further provide an apparatus for identifying a file type.

The technical solutions provided in the embodiments of the present invention are as follows:

A method for identifying a file type includes:
acquiring, from a transmitted data packet, a file header of a file to be identified, and determining whether a magic number of the file to be identified can be obtained from the file header;
if the magic number of the file to be identified can be obtained, searching first correspondence between a file type and the magic number for the file type that corresponds to the magic number in the file header;
determining whether data of the file to be identified complies with a data structure feature of the file type; and
if the data of the file to be identified complies with the data structure feature of the file type, determining that a file type of the file to be identified is the file type that corresponds to the magic number in the file header; if the data of the file to be identified does not comply with the data structure feature of the file type, determining that a file type of the file to be identified is an abnormal type, where the abnormal type is used to indicate that the file to be identified is a file whose type has been tampered with.

An apparatus for identifying a file type includes:
a first testing unit, configured to acquire, from a transmitted data packet, a file header of a file to be identified, and test whether a magic number of the file to be identified can be obtained from the file header;
a first searching unit, configured to: if the first testing unit can obtain the magic number of the file to be identified, search first correspondence between a file type and the magic number for the file type that corresponds to the magic number in the file header;
a first judging unit, configured to determine whether data of the file to be identified complies with a data structure feature of the file type; and
a first determining unit, configured to: if a determining result of the first judging unit is that the data of the file to be identified complies with the data structure feature of the file type, determine that a file type of the file to be identified is the file type that corresponds to the magic number in the file header; if a determining result of the first judging unit is that the data of the file to be identified does not comply with the data structure feature of the file type, determine that a file type of the file to be identified is an abnormal type, where the abnormal type is used to indicate that the file to be identified is a file whose type has been tampered with.

According to the embodiments of the present invention, after a type of a file to be identified is determined according to a magic number in a file header, further it needs to be determined again whether a file structure feature that is reflected by data in the file to be identified complies with a file structure feature that corresponds to the file type determined according to the magic number, and the file type of the file to be identified can be ultimately determined only in a case of compliance. By means of the foregoing solutions, a detection device is capable of effectively identifying a file whose type has been tampered with, thereby protecting confidential information against malicious disclosure.

### BRIEF DESCRIPTION OF DRAWING(S)

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a principle flowchart of a method for identifying a file type according to Embodiment 1 of the present invention;
FIG. 2 is a flowchart of a method for identifying a file type according to Embodiment 2 of the present invention;
FIG. 3 is a schematic diagram of an instance for identifying a file type according to Embodiment 2 of the present invention;
FIG. 4 is a flowchart of a method for identifying a file type according to Embodiment 3 of the present invention;
FIG. 5 is a schematic diagram of a structure feature of a file in portable document format (PDF, Portable Document Format) according to Embodiment 3 of the present invention;
FIG. 6 is a first schematic structural diagram of an apparatus for identifying a file type according to Embodiment 4 of the present invention;
FIG. 7 is a second schematic structural diagram of the apparatus for identifying a file type according to Embodiment 4 of the present invention; and
FIG. 8 is a schematic structural diagram of a first determining unit in an apparatus for identifying a file type according to an embodiment of the present invention.

### DESCRIPTION OF EMBODIMENTS

To make the objectives, technical solutions, and advantages of the embodiments of the present invention more clear, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

### Embodiment 1

In the embodiment of the present invention, there is a detection device arranged between a data packet sender and a data packet recipient. A data packet sent by the sender needs to pass the detection device before the data packet is sent to the recipient. In a scenario where the sender is a user inside a local area network constructed by an enterprise and the recipient is a user outside the local area network, the detection device may be a protection device, such as a firewall device or an intrusion prevention system (IPS, Intrusion Prevention System) device deployed on a border of the local area network, or may be integrated as an independent module into a device such as a router or an IPS. In a scenario of a personal user, the detection device may also be a host browser, an instant messaging (IM, Instant Messaging) chat client, or a software module of another application software.

The detection device detects a data packet transmitted by the sender and the recipient, and identifies a file type of a file carried in the transmitted data packet. Further, the detection device may filter, according to the identified file type and a pre-configured filtering policy, a data packet that carries some types of files limited by the filtering policy, so as to ensure security of confidential information.

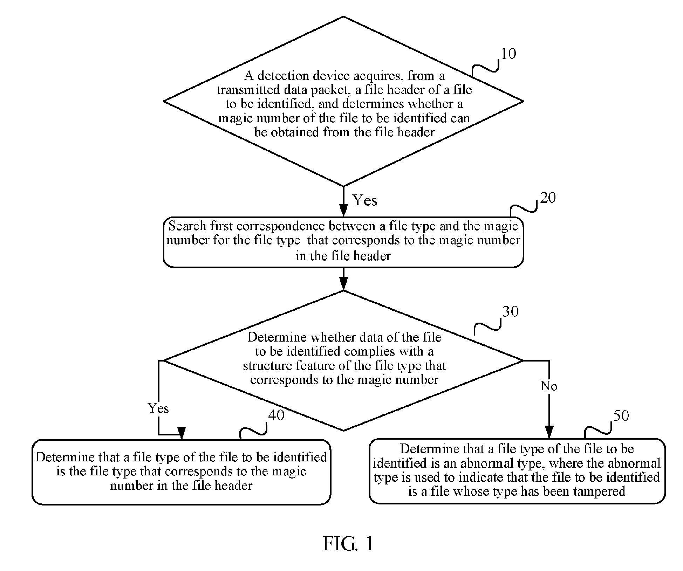

As shown in FIG. 1, a principle flow of a method for identifying a file type according to the embodiment of the present invention is as follows:
Step 10: The detection device acquires, from a transmitted data packet, a file header of a file to be identified, and determines whether a magic number of the file to be identified can be obtained from the file header; and if yes, perform step 20.

The detection device performs layer-by-layer protocol parsing of a data packet that passes the detection device. For a method for parsing the data packet, reference may be made to an existing deep packet inspection (DPI, Deep Packet Inspection) device, and no details are provided herein.

After receiving the transmitted data packet, the detection device obtains payload content of the data packet through the deep protocol parsing, and determines whether the payload content includes a feature field of file transmission. If the feature field is included, the detection device determines that the data packet carries a file. A process of determining, according to the feature field, whether the data packet carries a file belongs to the prior art, for which, refer to corresponding standard documents of various application layer protocols that may be used for transmitting a file, such as RFC 2616 that corresponds to the HyperText Transfer Protocol (HTTP, HyperText Transfer Protocol), RFC 959 that corresponds to the File Transfer Protocol (FTP, File Transfer Protocol), and RFC 783 that corresponds to the Trivial File Transfer Protocol (TFTP, Trivial File Transfer Protocol), and no details are provided herein.

If yes, it is determined that content carried in the data packet is a file, and file data in the payload content of the data packet is cached according to a file start address, where the file start address is indicated by a start address field in the file header; and it is determined whether the cached file data reaches a predetermined size: if yes, the cached file data is used as the file header of the file to be identified; otherwise, file data in payload content of a subsequent data packet in a same data flow continues to be cached.

After the cached file data reaches the predetermined size, the detection device compares in turn the cached data respectively with magic numbers that correspond to various identifiable file types; and if there is a magic number with a comparison result of consistency, the magic number with the comparison result of consistency is used as the magic number in the header of the file to be identified; otherwise, it is determined that the magic number of the file to be identified cannot be obtained.

The predetermined size is determined according to empirical data, such as length values of magic numbers of dozens of currently known identifiable file types. The magic number refers to field content that can be used to identify the file type in the file header. It should be noted that a magic number is an important way of identifying a file type, and as long as a file type of a file is identifiable, a magic number that corresponds to the file type can be surely extracted from a header of the file. A length of a magic number, a numerical value of the magic number, and a feature of the magic number vary with files of different file types. A magic number of a file type is two bytes, and that of another file type is 20 bytes or 22 bytes, and here it is hard to list all one by one. Generally, lengths of magic numbers are all within a range from 2 bytes to 32 bytes. Therefore, a size of the cached data may be set as 2 bytes to 32 bytes, so that an excessively large buffering space is not occupied and a relatively good identification effect can be implemented within this range.
Step 20: If the magic number of the file to be identified can be obtained, search first correspondence between a file type and the magic number for the file type that corresponds to the magic number in the file header.

The first correspondence between the a file type and the magic number is pre-stored in the detection device, and by using the first correspondence, a file type can be determined according to the magic number that is extracted from the file.

A specific instance is as follows: An original file is a file of a compressed-file type (rar, Roshal ARchive); the sender tampers with a magic number in a header of the file into a magic number that corresponds to a PDF file type, and sends the tampered file to the recipient; and after acquiring the magic number, the detection device searches for, from the first correspondence, a file type that corresponds to the magic number, and determines that the file to be identified is a PDF file.

Step 30: Determine whether data of the file to be identified complies with a data structure feature of the file type that corresponds to the magic number, and if yes, perform step 40; otherwise, perform step 50.

A data structure feature of a file reflects a data organizing feature of the file. The data structure feature is already determined at a file format designing stage, and all files of a type comply with such a data organizing form. The file structure feature includes a feature character or a feature character string, a data structure format used during data storage, relationships between objects of various data structures, a cross reference table, and the like. An adaptive file parser may be designed according to a data structure feature of a file of a certain type, and file data of a file type is input to a parser of the file type. If correct file content instead of an illegible code can be obtained through parsing, it indicates that the file data complies with the data structure feature of the file type. This is described in detail in a following example.

In this case, a file structure feature extracted from the file to be identified is still a structure feature of a rar file.
Step 40: If the data of the file to be identified complies with the structure feature of the file type that corresponds to the magic number, determine that a file type of the file to be identified is the file type that corresponds to the magic number in the file header.
Step 50: If the data of the file to be identified does not comply with the structure feature of the file type that corresponds to the magic number, determine that a file type of the file to be identified is an abnormal type, where the abnormal type is used to indicate that the file to be identified is a file whose type has been tampered with.

In the foregoing instance, the file type determined according to the magic number is rar, while the file structure feature extracted from the file to be identified is a structure feature of a PDF file. The two are different, indicating that the file to be identified has been tampered with.

Optionally, in the embodiment of the present invention, before the file type of the file to be identified is determined as the abnormal type, a data flow in which the data packet resides may be permitted to pass, but the data flow is blocked when the file type of the file to be identified is determined as the abnormal type. A benefit of doing so is that the detection device does not need to cache a large number of data packets; and because data loss is caused by the blocking of the data flow, the recipient cannot restore the file to be identified, thereby achieving a purpose of protecting data security.

According to the embodiment of the present invention, after a type of a file to be identified is determined according to a magic number in a file header, further it needs to be determined again whether a file structure feature that is reflected by data in the file to be identified complies with a file structure feature that corresponds to the file type determined according to the magic number, and the file type of the file to be identified can be ultimately determined only in a case of compliance. In this way, even if a sender attempts to evade detection by tampering with the magic number in the header of the file to be identified, because the structure feature of the file still corresponds to the type that corresponds to the magic number before the tampering but does not correspond to a type that corresponds to a magic number after the tampering, the detection device is capable of identifying the file whose type has been tampered with.

Compared with the tempering with the magic number, it is much more difficult for the sender to attempt to tamper with the file structure feature to evade the detection, because very probably a recipient cannot restore the original file as long as partial data in content of the file has been modified. Therefore, the method for identifying a file type according to the embodiment of the present invention can improve accuracy of identifying a file type and enhance security of confidential information.

### Embodiment 2

When a sender attempts to evade detection by tampering with a magic number in a header of a file to be identified, in addition to modifying a magic number of a file type into a magic number of another file type, the sender probably does not exactly know a field location of the magic number in the file header or the specific magic number of the another file type. In this case, the sender often randomly modifies partial field content of the file header, and a file header after the modification does not include a magic number of any identifiable file type.

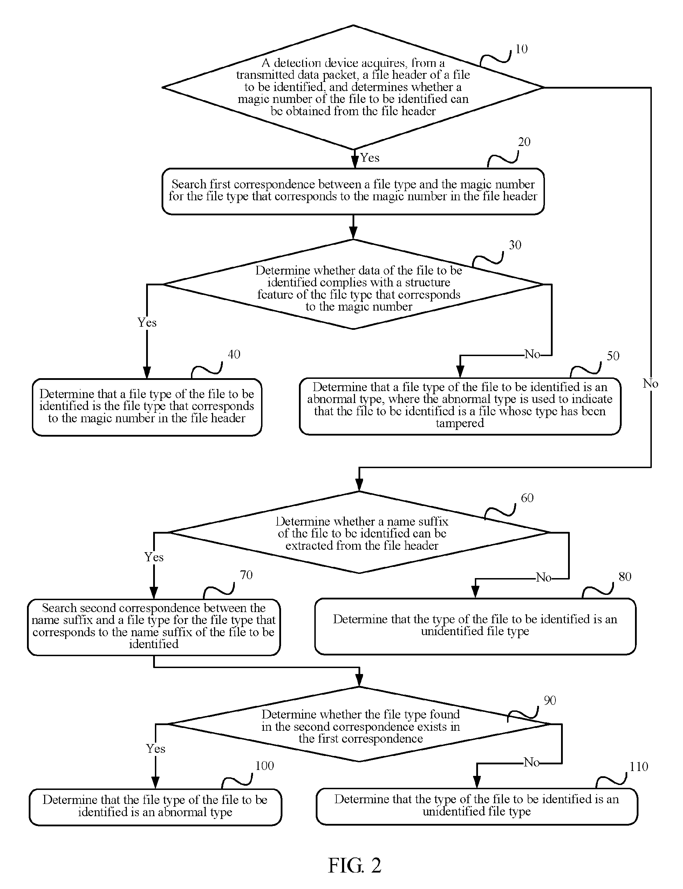

To deal with this case, this embodiment has made improvement based on Embodiment 1. FIG. 2 shows a flowchart of an improved method for identifying a file type, where step 10 to step 50 are similar to those of Embodiment 1 and are not repeated herein.
Step 10: A detection device acquires, from a transmitted data packet, a file header of a file to be identified, and determines whether a magic number of the file to be identified can be obtained from the file header, and if yes, perform step 20; otherwise, perform step 60.

A specific instance is as follows: An original file is a file of a rar type; and the sender tampers with field content of a magic number in a header of the file, and sends the tampered file to a recipient, where data after the tampering is not a magic number of any identifiable file type.

The detection device cannot successfully obtain, in a manner of obtaining a magic number of the file to be identified as described in step 10 of Embodiment 1, the magic number of the file to be identified.
Step 20: If the magic number of the file to be identified can be obtained, search first correspondence between a file type and the magic number for a file type that corresponds to the magic number in the file header.
Step 30: Determine whether data of the file to be identified complies with a structure feature of the file type that corresponds to the magic number, and if yes, perform step 40; otherwise, perform step 50.
Step 40: If the data of the file to be identified complies with the structure feature of the file type that corresponds to the magic number, determine that a file type of the file to be identified is the file type that corresponds to the magic number in the file header.
Step 50: If the data of the file to be identified does not comply with the structure feature of the file type that corresponds to the magic number, determine that a file type of the file to be identified is an abnormal type, where the abnormal type is used to indicate that the file to be identified is a file whose type has been tampered with.
Step 60: If the magic number of the file to be identified cannot be obtained, determine whether a name suffix of the file to be identified can be extracted from the data packet, and if yes, perform step 70; otherwise, perform step 80.

The file name is obtained through deep protocol parsing of the data packet. According to a predetermined suffix acquiring policy, it may be determined whether the file name includes a name suffix, and the name suffix is obtained.
Step 70: If the suffix name can be extracted, search second correspondence between the name suffix and a file type for the file type that corresponds to the name suffix of the file to be identified; and perform step 90.

In the foregoing instance, the detection device finds, from the second correspondence and according to a name suffix "rar", that the corresponding file type is a compressed-file type.
Step 80: If the name suffix cannot be extracted, determine that the type of the file to be identified is an unidentified file type.
Step 90: Determine whether the file type found in the second correspondence exists in the first correspondence, where the file type in the first correspondence is an identifiable file type, and if yes, perform step 100; otherwise, perform step 110.
Step 100: If the file type found in the second correspondence exists in the first correspondence, determine that the file type of the file to be identified is an abnormal type, where the abnormal type is used to indicate that the file to be identified is a file whose type has been tampered with.

In the foregoing instance, because the compressed-file type corresponding to the name suffix "rar" exists in the first correspondence, but a magic number of a text file type is not obtained in step 10, that is, a magic number of an identifiable file type is not obtained, it indicates that the magic number in the header of the file to be identified has been tampered with.
Step 110: If the file type found in the second correspondence does not exist in the first correspondence, determine that the type of the file to be identified is an unidentified file type.

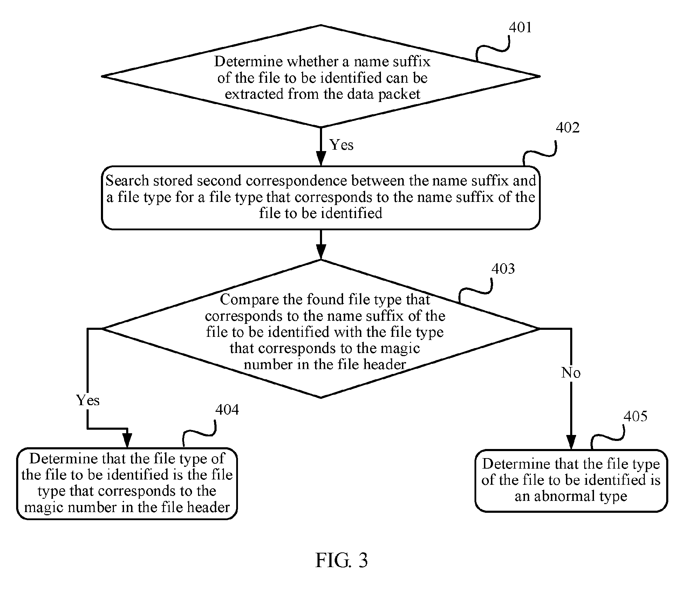

By means of the foregoing implementation solution, the type of the file to be identified can be accurately determined. Optionally, the forgoing step 40 is improved, so as to make it possible to detect a case in which the sender merely modifies the name suffix, and to further improve reliability and accuracy of identifying a tampering behavior. As shown in FIG. 3, step 40 further includes:
Step 401: Determine whether a name suffix of the file to be identified can be extracted from the data packet, and if yes, perform step 402.

Optionally, if the name suffix fails to be extracted, it is determined that the file type of the file to be identified is the file type that corresponds to the magic number in the file header.
Step 402: Search stored second correspondence between the name suffix and a file type for a file type that corresponds to the name suffix of the file to be identified.
Step 403: Compare the found file type that corresponds to the name suffix of the file to be identified with the file type that corresponds to the magic number in the file header, and determine whether the two are consistent, and if a comparison result is consistency, perform step 404; otherwise, perform step 405.
Step 404: Determine that the file type of the file to be identified is the file type that corresponds to the magic number in the file header.
Step 405: Determine that the file type of the file to be identified is an abnormal type.

The method for identifying a file type according to the embodiment of the present invention, on the basis of Embodiment 1, is applicable to a case in which a magic number of an original file is freely modified by a sender, thereby improving a file identification process and widening the application scope.

### Embodiment 3

In the embodiment of the present invention, an office file and a PDF file are used as an example to exemplarily describe the methods for identifying a file type according to Embodiment 1 and Embodiment 2. In this embodiment, an original file is an office file, and a sender modifies a magic number in a header of the file to a magic number of a PDF file type, so as to evade detection.

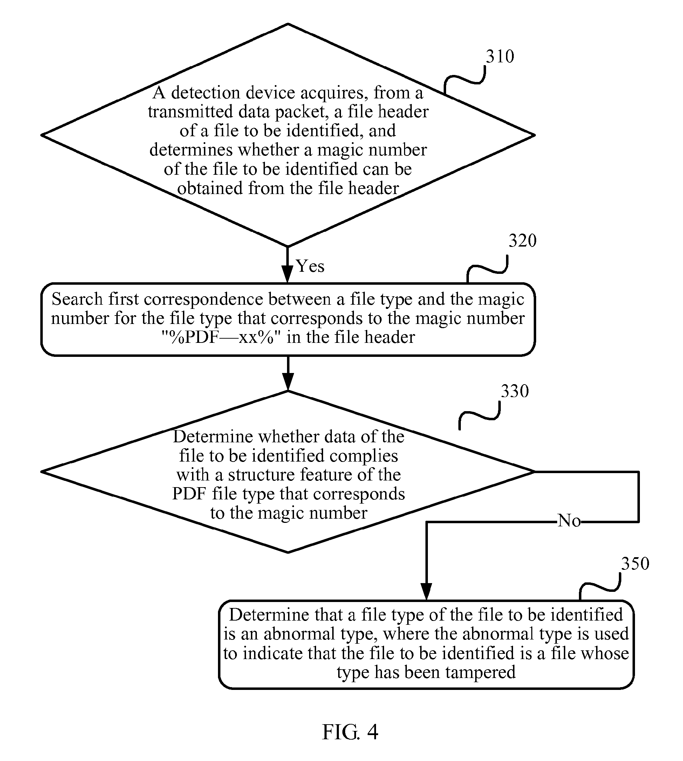

FIG. 4 is a flowchart of a method for identifying a file type according to the embodiment of the present invention, where various steps are similar to the steps in FIG. 2. Here, only partial steps performed in this instance are described in detail, and steps that are not performed are not repeated.
Step 310: A detection device acquires, from a transmitted data packet, a file header of a file to be identified, and determines whether a magic number of the file to be identified can be obtained from the file header; and if yes, perform step 320.

After determining, according to a feature field included in the data packet, that the data packet transmits a file, the detection device extracts file information from the data packet according to format definitions of various protocols used for file transmission, where the file information includes: a file name, a file start address, a data packet size, and the like.

Payload content of the data packet for transmitting the file in a data flow is cached, starting from the file start address, till 32 bytes are cached, and the cached data is used as the file header.

The detection device obtains, from the cached data, a magic number "%PDF-xx%" in the file header of the file to be identified, where xx is a version identifier.
Step 320: If the magic number of the file to be identified can be obtained, search first correspondence between a file type and the magic number for the file type that corresponds to the magic number in the file header.

The detection device finds, from the first correspondence, that the file type corresponding to the magic number "%PDF-xx%" is a PDF file type.
Step 330: Determine whether data of the file to be identified complies with a structure feature of the file type that corresponds to the magic number, and if the data of the file to be identified does not comply with the structure feature of the file type that corresponds to the magic number, perform step 350.

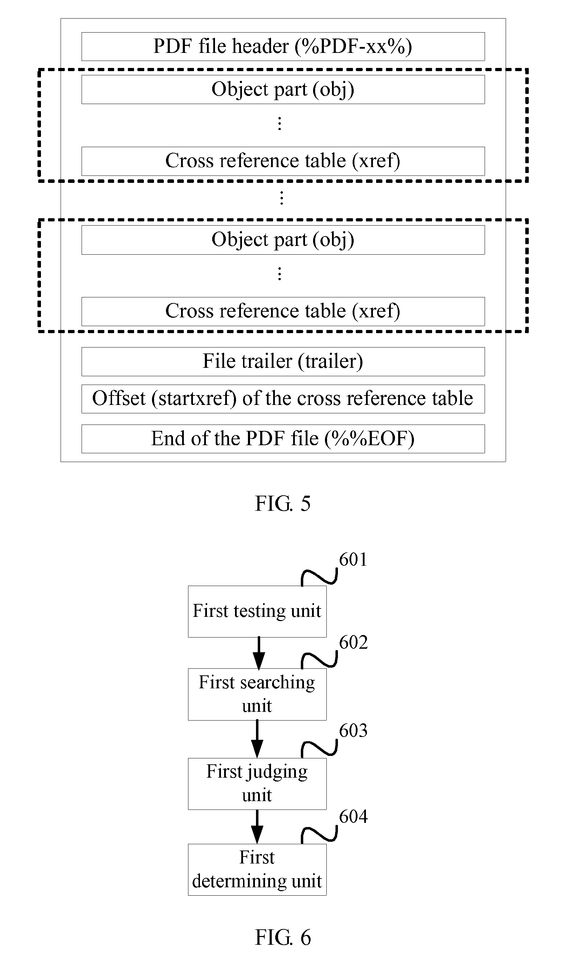

A structure feature of a PDF file is specifically shown in FIG. 5.

A file header of the PDF file starts with "%PDF-xx%". What follows an offset in a row of the file header is a content part of the PDF file. The content part is an object (identified as obj). For a specific format of the object, refer to a relevant standard definition. What follows several objects is a cross reference table. The cross reference table (identified as xref) stores information of previous objects, such as an offset involved during data storage of each object. A compound body made up of the several objects and the cross referenced table may repeat multiple times. At the end of the file are a file trailer (identifier as trailer), a storage offset (identified as startxref) of each cross reference table, and a PDF file ending mark (identified as % % EOF). The file trailer is used to quickly index the cross reference table and a special object.

The detection device determines whether a character string using obj as a start identifier exists in the cached data. If the character string does not exist, it indicates that the data of the file to be identified does not comply with a structure feature of the PDF file type. Because the original file is an office file and what follows the magic number is a structure body of OLE2 instead of the character string using obj as the start identifier, the data of the file to be identified does not comply with the structure feature of the PDF file type.
Step 350: If the data of the file to be identified does not comply with the structure feature of the file type that corresponds to the magic number, determine that a file type of the file to be identified is an abnormal type, where the abnormal type is used to indicate that the file to be identified is a file whose type has been tampered with.

In this embodiment, because the data of the file to be identified does not comply with the structure feature of the PDF file type, the detection device outputs the file type of the file to be identified as an abnormal type.

### Embodiment 4

Correspondingly, the embodiment of the present invention further provides an apparatus for identifying a file type. As shown in FIG. 6, the apparatus includes a first testing unit 601, a first searching unit 602, a first judging unit 603, and a first determining unit 604, which are specifically as follows:

The first testing unit 601 is configured to acquire, from a transmitted data packet, a file header of a file to be identified, and test whether a magic number of the file to be identified can be obtained from the file header.

The first searching unit 602 is configured to: if the first testing unit 601 can obtain the magic number of the file to be identified, search first correspondence between a file type and the magic number for the file type that corresponds to the magic number in the file header.

The first judging unit 603 is configured to determine whether data of the file to be identified complies with a data structure feature of the file type that is found by the first searching unit 602.

The first determining unit 604 is configured to: if a determining result of the first judging unit 603 is that the data of the file to be identified complies with the data structure feature of the file type, determine that a file type of the file to be identified is the file type that corresponds to the magic number in the file header; if a determining result of the first judging unit is that the data of the file to be identified does not comply with the data structure feature of the file type, determine that a file type of the file to be identified is an abnormal type, where the abnormal type is used to indicate that the file to be identified is a file whose type has been tampered with.

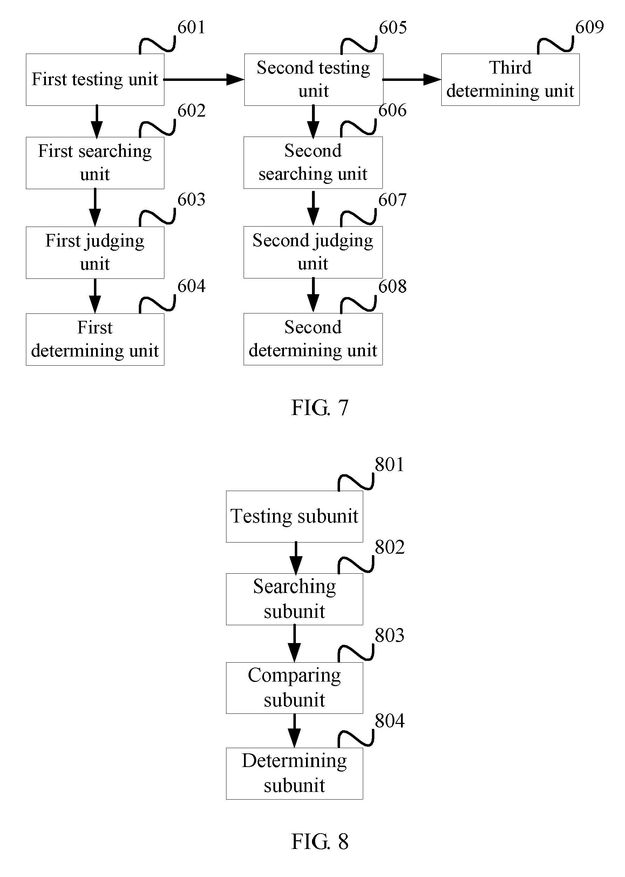

Further, as shown in FIG. 7, the apparatus in FIG. 6 further includes:
a second testing unit 605, configured to: if the first testing unit 601 cannot obtain the magic number of the file to be identified, test whether a name suffix of the file to be identified can be extracted from the data packet by protocol parsing;
a second searching unit 606, configured to: if the second testing unit 605 can extract the name suffix, search second correspondence between the name suffix and a file type for the file type that corresponds to the name suffix of the file to be identified;
a second judging unit 607, configured to determine whether the file type found by the second searching unit 606 in the second correspondence exists in the first correspondence, where the file type in the first correspondence is an identifiable file type;
a second determining unit 608, configured to: if a determining result of the second judging unit 607 is that the file type found by the second searching unit 606 in the second correspondence exists in the first correspondence, determine that the file type of the file to be identified is an abnormal type; and
a third determining unit 609, configured to: if the second testing unit 605 cannot extract the name suffix or the file type found in the second correspondence does not exist in the first correspondence, determine that the type of the file to be identified is an unidentified file type.

Optionally, referring to FIG. 8, the first determining unit 604 includes:
a testing subunit 801, configured to: when the determining result of the first judging unit 603 is that the data of the file to be identified complies with the data structure feature of the file type, test whether the name suffix of the file to be identified can be extracted from the data packet;
a searching subunit 802, configured to: if the testing subunit 801 can extract the name suffix of the file to be identified, search stored second correspondence between the name suffix and a file type for the file type that corresponds to the suffix name of the file to be identified;
a comparing subunit 803, configured to compare the file type that is found by the searching subunit 802 and corresponds to the name suffix of the file to be identified with the file type that corresponds to the magic number in the file header; and
a determining subunit 804, configured to: if a comparison result of the comparing subunit 803 is consistency, determine that the file type of the file to be identified is the file type that corresponds to the magic number in the file header; if a comparison result is inconsistency, determine that the file type of the file to be identified is an abnormal type.

Persons of ordinary skill in the art may understand that all or a part of the steps of the method embodiments may be implemented by a program instructing relevant hardware. The program may be stored in a computer readable storage medium, such as a ROM/RAM, a magnetic disk, or an optical disc.

In the foregoing embodiments, description of each embodiment has its emphasis, and for a part not described in detail in a certain embodiment, reference may be made to relevant description in other embodiments. Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart the spirit and scope of the technical solutions of the embodiments of the present invention.

## Claims

1. A method for identifying a file type, comprising:
acquiring, from a transmitted data packet, a file header of a file to be identified, and determining whether a magic number of the file to be identified can be obtained from the file header;
if the magic number of the file to be identified can be obtained, searching first correspondence between a file type and the magic number for the file type that corresponds to the magic number in the file header;
determining whether data of the file to be identified complies with a data structure feature of the file type; and
if the data of the file to be identified complies with the data structure feature of the file type, determining that a file type of the file to be identified is the file type that corresponds to the magic number in the file header; and if the data of the file to be identified does not comply with the data structure feature of the file type, determining that a file type of the file to be identified is an abnormal type, wherein the abnormal type is used to indicate that the file to be identified is a file whose type has been tampered with.

2. The method according to claim 1, wherein after the determining whether a magic number of the file to be identified can be obtained from the file header, the method further comprises:
if the magic number of the file to be identified cannot be obtained, determining whether a name suffix of the file to be identified can be extracted from the data packet by protocol parsing; and
if the suffix name can be extracted, searching second correspondence between the name suffix and a file type for the file type that corresponds to the name suffix of the file to be identified; determining whether the file type found in the second correspondence exists in the first correspondence, wherein the file type in the first correspondence is an identifiable file type; and if the file type found in the second correspondence exists in the first correspondence, determining that the file type of the file to be identified is an abnormal type; or
if the name suffix cannot be extracted or the file type found in the second correspondence does not exist in the first correspondence, determining that the type of the file to be identified is an unidentified file type.

3. The method according to claim 1, wherein the if the data of the file to be identified complies with the data structure feature of the file type, determining that a file type of the file to be identified is the file type that corresponds to the magic number in the file header comprises:
if the data of the file to be identified complies with the data structure feature of the file type, determining whether a name suffix of the file to be identified can be extracted from the data packet;
if the name suffix of the file to be identified can be extracted, searching stored second correspondence between the name suffix and a file type for the file type that corresponds to the suffix name of the file to be identified;
comparing the found file type that corresponds to the name suffix of the file to be identified with the file type that corresponds to the magic number in the file header; and
if a comparison result is consistency, determining that the file type of the file to be identified is the file type that corresponds to the magic number in the file header.

4. The method according to any one of claims 1 to 3, wherein the acquiring, from a transmitted data packet, a file header of a file to be identified comprises:
after receiving the transmitted data packet, obtaining payload content of the data packet by protocol parsing, and determining whether the payload content comprises a file header identifier;
if the payload content comprises the file header identifier, determining that content carried in the data packet is a file, and caching file data in the payload content of the data packet according to a file start address that is indicated by the file header identifier; and
determining whether the cached file data reaches a predetermined size, and if yes, using the cached file data as the file header of the file to be identified; otherwise, continuing to cache file data in payload content of a subsequent data packet in a same data flow.

5. The method according to claim 4, wherein the determining whether a magic number of the file to be identified can be obtained from the file header comprises:
comparing in turn the cached data respectively with magic numbers that correspond to various identifiable file types; and
if there is a magic number with a comparison result of consistency, using the magic number with the comparison result of consistency as the magic number in the header of the file to be identified; otherwise, determining that the magic number of the file to be identified cannot be obtained.

6. The method according to claim 4, wherein the predetermined size is 2 bytes to 32 bytes.

7. The method according to claim 1, 2, 3, 5, or 6, wherein before the determining that a file type of the file to be identified is an abnormal type, the method further comprises:
permitting a data flow in which the data packet resides to pass; and
after the determining that a file type of the file to be identified is an abnormal type, the method further comprises:
blocking the data flow in which the data packet resides.

8. An apparatus for identifying a file type, comprising:
a first testing unit, configured to acquire, from a transmitted data packet, a file header of a file to be identified, and test whether a magic number of the file to be identified can be obtained from the file header;
a first searching unit, configured to: if the first testing unit can obtain the magic number of the file to be identified, search first correspondence between a file type and the magic number for the file type that corresponds to the magic number in the file header;
a first judging unit, configured to determine whether data of the file to be identified complies with a data structure feature of the file type; and
a first determining unit, configured to: if a determining result of the first judging unit is that the data of the file to be identified complies with the data structure feature of the file type, determine that a file type of the file to be identified is the file type that corresponds to the magic number in the file header; if a determining result of the first judging unit is that the data of the file to be identified does not comply with the data structure feature of the file type, determine that a file type of the file to be identified is an abnormal type, wherein the abnormal type is used to indicate that the file to be identified is a file whose type has been tampered with.

9. The apparatus according to claim 8, further comprising:
a second testing unit, configured to: if the first testing unit cannot obtain the magic number of the file to be identified, test whether a name suffix of the file to be identified can be extracted from the data packet by protocol parsing;
a second searching unit, configured to: if the second testing unit can extract the name suffix, search second correspondence between the name suffix and a file type for the file type that corresponds to the name suffix of the file to be identified;
a second judging unit, configured to determine whether the file type found in the second correspondence exists in the first correspondence, wherein the file type in the first correspondence is an identifiable file type;
a second determining unit, configured to: if a determining result of the second judging unit is existence, determine that the file type of the file to be identified is an abnormal type; and
a third determining unit, configured to: if the second testing unit cannot extract the name suffix or the file type found in the second correspondence does not exist in the first correspondence, determine that the type of the file to be identified is an unidentified file type.

10. The apparatus according to claim 8 or 9, wherein the first determining unit comprises:
a testing subunit, configured to: when the determining result of the first judging unit is that the data of the file to be identified complies with the data structure feature of the file type, test whether the name suffix of the file to be identified can be extracted from the data packet;
a searching subunit, configured to: if the testing subunit can extract the name suffix of the file to be identified, search stored second correspondence between the name suffix and a file type for the file type that corresponds to the suffix name of the file to be identified;
a comparing subunit, configured to compare the file type that is found by the searching subunit and corresponds to the name suffix of the file to be identified with the file type that corresponds to the magic number in the file header; and
a determining subunit, configured to: if a comparison result is consistency, determine that the file type of the file to be identified is the file type that corresponds to the magic number in the file header; if a comparison result is inconsistency, determine that the file type of the file to be identified is an abnormal type.
